# EUROPÄISCHE PATENTSCHRIFT

(11) **EP 1 818 209 B1**
(45) Veröffentlichungstag und Bekanntmachung des Hinweises auf die Patenterteilung: **22.07.2009**
(21) Anmeldenummer: 06023887.0
(22) Anmeldetag: 17.11.2006
(51) Int. Cl.: B60N 2/20, B60N 2/68

(54) **Sportschalensitz für Fahrzeuge, insbesondere Personenkraftwagen**
Sport bucket seat for vehicles, in particular passenger cars
Siège-baquet de sport pour véhicules, en particulier voitures particulières

(30) Priorität: 07.02.2006 DE 102006005506
(43) Veröffentlichungstag der Anmeldung: 15.08.2007
(73) Patentinhaber: Dr. Ing. h.c. F. Porsche Aktiengesellschaft, 70435 Stuttgart (DE)
(72) Erfinder: Mäbert, Siegfried, 73230 Kirchheim (DE); Padberg, Klaus, 70180 Stuttgart (DE); Juraschek, Romuald, 75365 Calw (DE); Preuninger, Andreas, 71287 Weissach-Flacht (DE)

(56) Entgegenhaltungen:
- DE-A1- 10 310 424
- DE-A1- 10 349 857
- DE-A1- 19 853 156

## Beschreibung

Die Erfindung betrifft einen Sportschalensitz für Fahrzeuge, insbesondere Personenkraftwagen, mit einem Sitzteil und einem Lehnenteil, wobei der Sportschalensitz zumindest eine formsteife Tragschale mit hochgezogenen Seitenwangen zur beidseitigen Abstützung der Beine, des Gesäßes und des Oberkörpers eines Sitzinsassen umfasst, mit den Merkmalen des Oberbegriffs des Anspruchs 1. Ein derartiger Sportschalensitz ist aus der DE 198 53 156 A1 bekannt.

Ein Sportschalensitz der eingangs genannten Gattung ist aus der DE 42 32 364 C2 bekannt und umfasst eine einstückige, dem menschlichen Körper angepasste formsteife Tragschale, in die elastische Polsterelemente eingesetzt sind. Ein derartiger Sportschalensitz hat sich sowohl im Straßenverkehr als auch im Rennsporteinsatz hervorragend bewährt, da neben den Beinen und dem Oberkörper insbesondere der Gesäßbereich eines Fahrzeuginsassen eine optimale beidseitige Abstützung erfährt.

Bei zweitürigen, mit einer Hintersitzanlage versehenen Personenkraftwagen ist bei einem derart ausgebildeten Sportschalensitz der Ein- und Ausstieg zur Hintersitzanlage jedoch nur sehr erschwert bzw. gar nicht möglich.

Aufgabe der Erfindung ist es, einen leichtgewichtigen Sportschalensitz der eingangs genannten Gattung so weiterzubilden, dass unter Beibehaltung eines optimalen Seitenhalts für den Sitzinsassen mit möglichst geringem Aufwand der Zugang zur Hintersitzanlage eines Fahrzeuges gewährleistet ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Merkmale des Anspruchs 1 ein leichtgewichtiger Sportschalensitz geschaffen wird, dessen Lehnenteil durch Entriegeln einer Verriegelungseinrichtung nach vorne in eine abgeklappte Stellung verlagerbar ist. In der abgeklappten Stellung ist somit ein problemloser Zugang zur Hintersitzanlage des Fahrzeuges gegeben. Durch Zurückschwenken der Lehne in die aufrechte Gebrauchstellung ist im Fahrbetrieb eine beidseitige optimale Seitenführung im Bein- ,Oberkörper- und insbesondere im Gesäßbereich gegeben.

Die zwischen der sitzseitigen Tragschale und der lehnenseitigen Tragschale vorgesehenen reinen Drehgelenke und die lösbare hintere Verriegelungseinrichtung weisen einen einfachen, kostengünstigen Aufbau auf und nehmen wenig Bauraum in Anspruch. Insbesondere die Drehgelenke benötigen in Fahrzeugquerrichtung gesehen wenig Bauraum und weisen ein geringes Gewicht auf. Als Verriegelungseinrichtung können beispielsweise ein mittiges oder zwei seitliche Drehfallenschlösser verwendet werden, die bei einfachem Aufbau einerseits eine stabile Verankerung des aufrechten Lehnenteils am Sitzteil bewerkstelligen und die andererseits ein einfaches nach vorne Schwenken des Lehnenteils auf das Sitzteil gewährleisten. Die aus faserverstärkten, insbesondere kohlefaserverstärkten Kunststoff bestehenden Tragschalen weisen ein geringes Gewicht und aufgrund der bereichsweisen. Mehrschaligkeit eine hohe Festigkeit auf. Der Carbon-Look an der Außenseite der jeweiligen Außenschale der Tragschale verleiht dem Sportschalensitz zudem eine hochwertige Optik.

Ein Ausführungsbeispiel der Erfindung ist in der Zeichnung dargestellt und wird im Folgenden näher erläutert. Es zeigen
- Fig. 1: eine perspektivische Ansicht von schräg vorne auf einen Sportschalensitz eines Kraftfahrzeuges
- Fig. 2: eine Seitenansicht des Sportschalensitzes,
- Fig. 3: eine weitere perspektivische Ansicht von schräg vorne auf den Sportschalensitz,
- Fig. 4: einen Schnitt nach der Linie IV-IV der Fig. 2 in größerer Darstellung,
- Fig. 5: einen Schnitt nach der Linie V-V der Fig. 2 in größerer Darstellung,
- Fig. 6: einen Schnitt nach der Linie Vl-Vl der Fig. 2 in größerer Darstellung,
- Fig. 7: einen Schnitt nach der Linie Vll-Vll der Fig. 3 in größerer Darstellung.

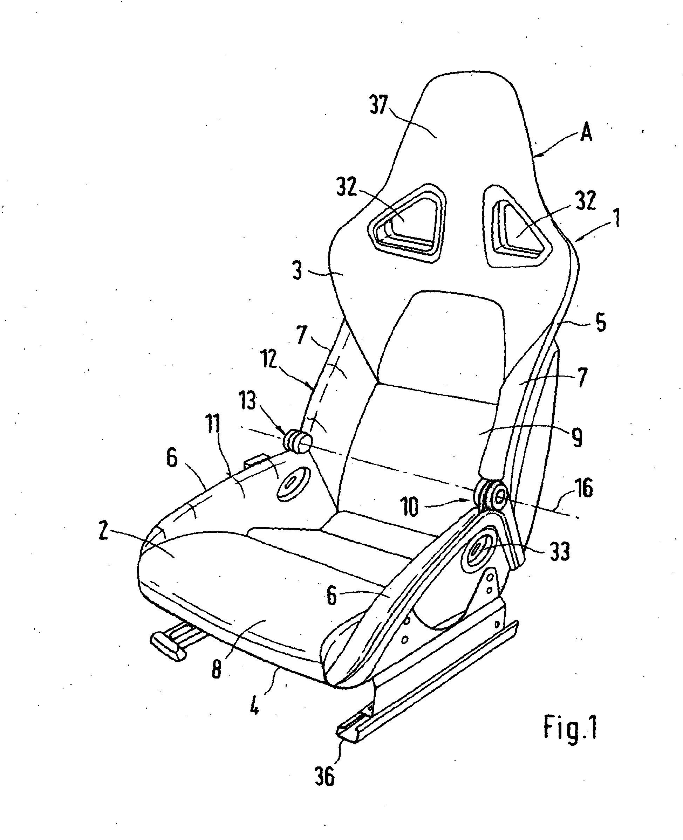

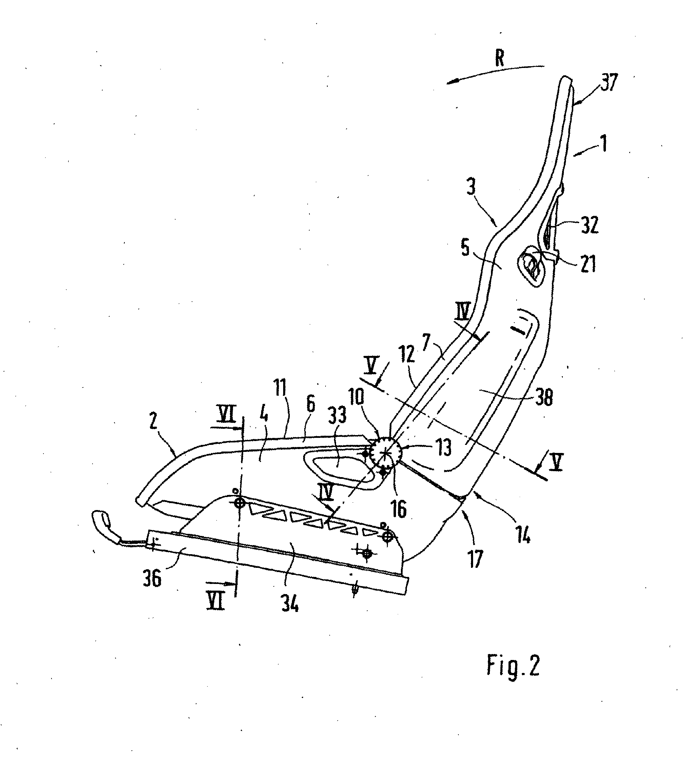

Ein Sportschalensitz 1 für Fahrzeuge, insbesondere Personenkraftwagen wie Sportwagen, Rennfahrzeuge oder dgl. umfasst ein Sitzteil 2 und ein Lehnenteil 3. Gemäß Fig. 1 weist der Sportschalensitz 1 zumindest eine formsteife Tragschale 4, 5 mit beidseitig hochgezogenen Seitenwangen 6, 7 zur optimalen beidseitigen Abstützung der Beine, des Gesäßes und des Oberkörpers eines Sitzinsassen im Fahrbetrieb auf. Dem Sitzteil 2 und dem Lehnenteil 3 sind jeweils separat hergestellte Tragschalen 4, 5 zugeordnet, die zur Aufnahme von elastischen Polsterelementen 8, 9 dienen. Die Polsterelemente 8, 9 setzen sich jeweils aus einem inneren Schaumstoffkörper und einem äußeren dekorativen Bezug zusammen (nicht näher dargestellt) und sind fest oder lösbar an den Tragschalen 4, 5 in Lage gehalten. Die sitzteilseitige Tragschale 4 ist an ihren beiden Längsseiten mit hochgezogenen Seitenwangen 6 versehen, die von vorne nach hinten hin nach oben ansteigen (Fig. 2). Die lehnenseitige Tragschale 5 weist gegenüberliegende Seitenwangen 7 auf.

Die Tragschalen 4, 5 des Sitzteils 2 und des Lehnenteils 3 sind an beiden Längsseiten benachbart eines seitlichen Übergangsbereiches 10 eines oberen Randes 11 der sitzseitigen Seitenwange 6 und eines vorderen Bereiches 12 der lehnenseitigen Seitenwange 7 über reine Drehgelenke 13 miteinander verbunden.

In einem querverlaufenden rückwärtigen Bereich 14 des Sportschalensitzes 1 ist eine lösbare Verriegelungseinrichtung 15 zwischen dem Sitzteil 2 und dem Lehnenteil 3 vorgesehen. Mittels der lösbaren Verriegelungseinrichtung 15 ist das Lehnenteil 3 wahlweise in einer aufrechten Gebrauchsstellung A festlegbar oder um eine durch die beiden Drehgelenke 13 gebildeten, querverlaufenden, etwa horizontal ausgerichteten Schwenkachse 16 nach vorne hin in Pfeilrichtung R in eine abgeklappte Stellung B auf das Sitzteil 2 des Sportschalensitzes 1 verlagerbar und umgekehrt. In der abgeklappten Stellung B ist der Zugang zu einer nicht näher gezeigten Hintersitzanlage eines vorzugsweise zweitürig ausgebildeten Fahrzeuges gewährleistet. Ferner ist in dieser Stellung der Bereich der Hintersitzanlage mit Gegenständen beladbar.

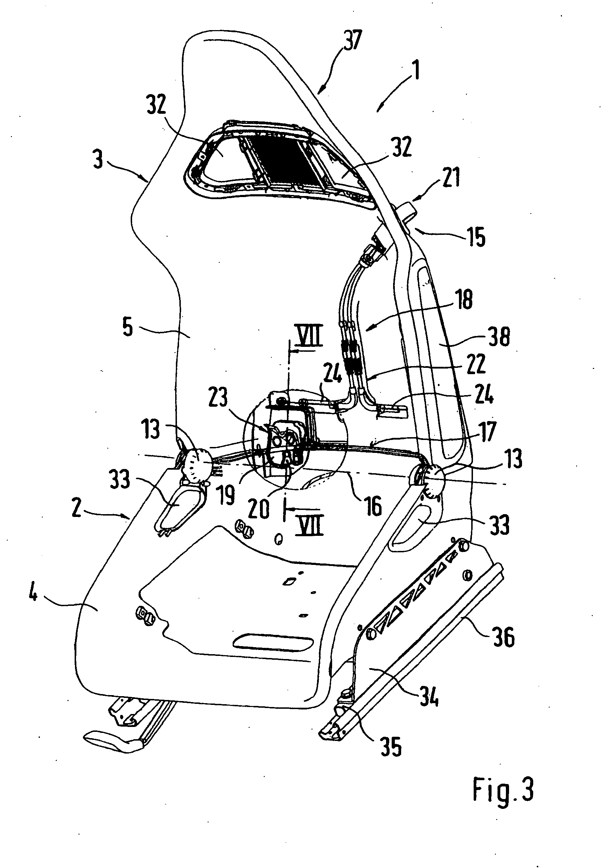

Die lösbare Verriegelungseinrichtung 15 ist benachbart eines querverlaufenden Übergangsbereiches 17 von Sitzteil 2 und Lehnenteil 3 angeordnet. Die lösbare Verriegelungseinrichtung 15 umfasst zumindest einen mit einer Betätigungseinrichtung 18 zusammenwirkenden verschwenkbaren, federbeaufschlagten Verriegelungshaken 19, der in einer Verriegelungsstellung einen Haltebolzen 20 verriegelnd hintergreift. Durch Betätigen einer Handhabe 21 der Betätigungseinrichtung 18 ist der Verriegelungshaken 19 von einer Verriegelungsstellung in eine Freigabestellung verlagerbar, in der das Lehnenteil 3 in die abgeklappte Stellung B bewegbar ist (nicht näher dargestellt). Die Betätigungseinrichtung 18 umfasst eine Handhabe 21 und ein Übertragungselement 22, wobei das Übertragungselement 22 einerseits mit dem Verriegelungshaken 19 und andererseits mit der Handhabe 21 in Wirkverbindung steht. Die Handhabe 21 wird durch eine Zugschlaufe, einen Griff, einen Schwenkhebel oder dgl. gebildet. Gemäß Fig. 3 ist im Ausführungsbeispiel in einem seitlichen Bereich des Sportschalensitzes 1 am Lehnenteil 3 eine Zugschlaufe vorgesehen, die benachbart des Drehgelenkes 13 oder höherliegend angeordnet sein kann.

Das Übertragungselement 22 wird durch zumindest einen Bowdenzug, ein Gestänge oder dgl. gebildet. Im Ausführungsbeispiel ist die Verriegelungseinrichtung 15 nach Art eines Drehfallenschlosses ausgebildet. Vorzugsweise umfasst die Verriegelungseinrichtung 15 zwei in Querrichtung gesehen mit Abstand zueinander angeordnete Drehfallenschlösser 23, wobei jedes Drehfallenschloss 23 über einen separaten Bowdenzug 24 mit der gemeinsamen Handhabe 21 verbunden ist. Jedes Drehfallenschloss 23 besitzt ein den Haltebolzen 20 aufnehmendes Lagerteil 25 und ein den Verriegelungshaken 19 beinhaltendes Gehäuseteil 26. Im Ausführungsbeispiel sind die Lagerteile 25 mit den Haltebolzen 20 dem Sitzteil 2 zugeordnet, wogegen die Gehäuseteile 26 mit den Verriegelungshaken 19 am Lehnenteil 3 vorgesehen sind.

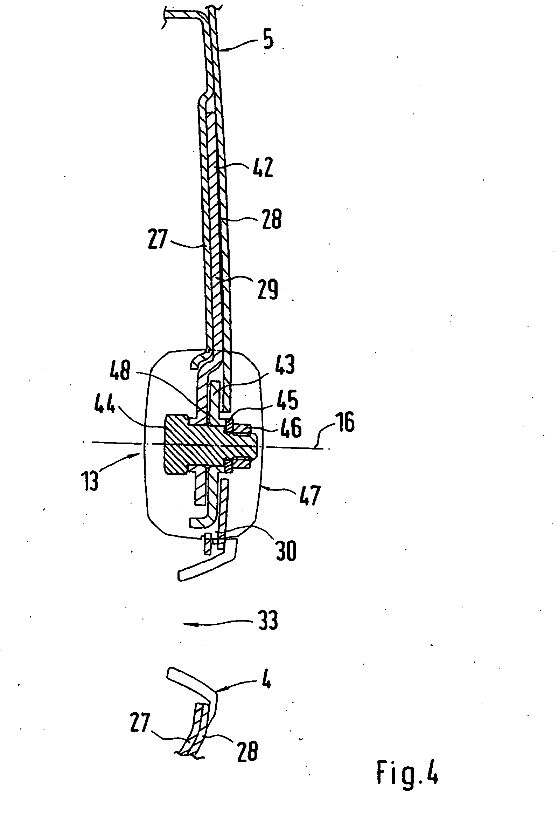

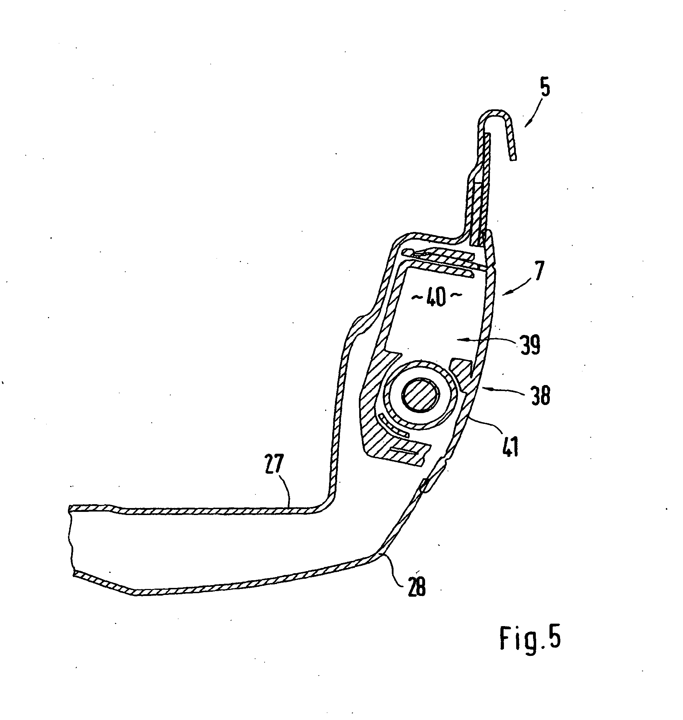

Jeder etwa horizontal ausgerichtete Haltebolzen 20 erstreckt sich in Fahrzeuglängsrichtung, wogegen die Verriegelungshaken 19 um eine längsgerichtete Drehachse in Fahrzeugquerrichtung verschwenkbar sind. Jedes Drehgelenk 13 ist mit Seitenwangen 6, 7 der lehnenseitigen Tragschale 5 und der sitzseitigen Tragschale 4 verbunden. Zumindest eine der beiden Tragschalen 4, 5 des Sportschalensitzes 1 ist bereichsweise mehrschalig ausgebildet und setzt sich aus einer Innenschale 27 und einer Außenschale 28 zusammen (Fig. 4 und 5). Im Ausführungsbeispiel sind beide Tragschalen 4, 5 bereichsweise mehrschalig ausgebildet. Die Innenschale 27 und die Außenschale 28 der jeweiligen Tragschalen 4, 5 sind an gleichgerichteten Wandabschnitten vorzugsweise miteinander verklebt.

Im Bereich der Drehgelenke 13 sind taschenförmige bzw. nischenförmige Aufnahmen 29, 30 an den Tragschalen 4, 5 zur stabilen Verankerung der Drehgelenke 13 vorgesehen (Fig. 4).

Beide Tragschalen 4, 5 sind aus einem faserverstärkten, vorzugsweise kohlefaserverstärktem Kunststoff gefertigt und mehrschichtig aufgebaut. Die äußerste Schicht der Außenschalen 28 der Tragschalen 4, 5 weisen vorzugsweise eine hochwertig anmutende Carbon-Optik auf.

Die Bauteile der Drehgelenke 13 bzw. der Verriegelungseinrichtung 15 sind in taschenförmige Aufnahmen 29, 30, 31 der Tragschalen 4, 5 eingesetzt und in diesen Aufnahmen 29, 30, 31 durch Kleben in Lage gehalten.

Am Sitzteil 2 und am Lehnenteil 3 sind Öffnungen 32, 33 zum Hindurchführen von Bauteilen eines nicht näher dargstellten Sicherheitsgurtsystems vorgesehen (z.B. Gurtband, Gurtschloss oder dgl.).

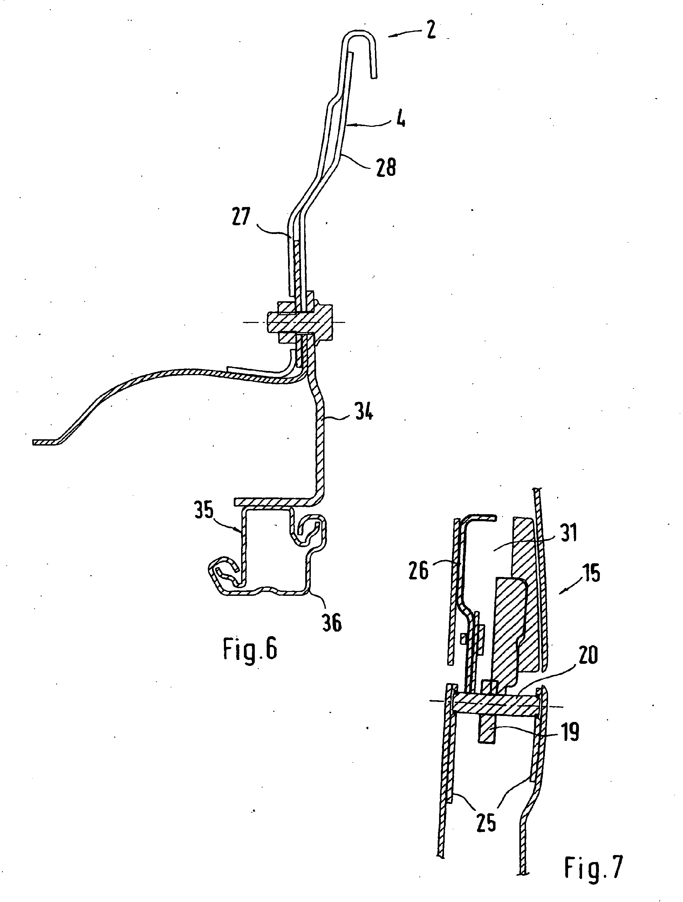

Das Sitzteil 2 ist in Fahrzeuglängsrichtung verstellbar ausgebildet. Hierzu ist die Tragschale 4 des Sitzteils 2 an beiden Längsseiten über außenliegende Konsolen 34 mit Sitzschienen 35 verbunden, die mit karosseriefesten Führungsschienen 36 zusammenwirken (Fig. 6).

Im oberen Bereich des Lehnenteils 3 ist eine integrierte Kopfstütze 37 vorgesehen.

In den der Fahrzeugaußenseite zugekehrten Seitenwangen 7 des Lehnenteils 5 des Sportschalensitzes 1 ist örtlich ein Seitenairbag 38 angeordnet. Ein vorgefertigtes Airbagmodul 39 ist in einen Hohlraum 40 der Seitenwange 7 aufgenommen und durch einen außenliegenden Deckel 41 verkleidet (Fig. 5).

Jedes Drehgelenk 13 umfasst ein an der lehnenseitigen Tragschale 5 vorgesehenen Aufnahme 29 verankertes Lagerteil 42, ein an der sitzseitigen Tragschale 4 vorgesehenen Aufnahme 30 befestigtes Lagerteil 43, einen querverlaufenden Gelenkbolzen 44, eine Scheibe 45, eine Mutter 46 und eine zweiteilig ausgebildete Abdeckung 47. Zwischen beiden Lagerteilen 42, 43 kann ein dazwischenliegender Reibungskörper 48 vorgesehen sein (Fig. 4).

## Patentansprüche

1. Sportschalensitz (1) für Fahrzeuge, insbesondere Personenkraftwagen mit einem Sitzteil (2) und einem Lehnenteil (3), wobei der Sportschalensitz (1) zumindest eine formsteife Tragschale (4, 5) mit hochgezogenen Seitenwangen (6, 7) zur beidseitigen Abstützung der Beine, des Gesäßes und des Oberkörpers eines Sitzinsassen umfasst, und dem Sitzteil (2) und dem Lehnenteil (3) jeweils eine separate Tragschale (4, 5) zugeordnet ist, wobei die beiden Tragschalen (4, 5), des Sitzteiles (2) und des Lehnenteiles (3) in einem Übergangsbereich (10) über reine Drehgelenke (13) miteinander verbunden sind, **dadurch gekennzeichnet, dass** die Drehgelenke (13) benachbart eines seitlichen Übergangsbereiches (10) eines oberen Randes (11) der sitzseitigen Seitenwange (6) und eines vorderen Bereiches (12) der lehnenseitigen Seitenwange (7) angeordnet sind, dass in einem querverlaufenden rückwärtigen Bereich des Sportschalensitzes (1) eine lösbare Verriegelungseinrichtung (15) zwischen dem Sitzteil (2) und dem Lehnenteil (3) vorgesehen ist und dass das Lehnenteil (3) durch Entriegeln der Verriegelungseinrichtung (15) von einer aufrechten Gebrauchsstellung (A) nach vorne in eine abgeklappte Stellung (B) auf das Sitzteil (2) verlagerbar ist, in der ein problemloser Zugang zu einer Hintersitzanlage des Fahrzeuges gegeben ist.

2. Sportschalensitz nach Anspruch 1, **dadurch gekennzeichnet, dass** die lösbare Verriegelungseinrichtung (15) benachbart einem querverlaufenden Übergangsbereich (17) von Sitzteil (2) und Lehnenteil (3) angeordnet ist.

3. Sportschalensitz nach einem oder mehreren der vorangegangenen Ansprüche, **dadurch gekennzeichnet, dass** die lösbare Verriegelungseinrichtung (15) zumindest einen mit einer Betätigungseinrichtung (18) zusammenwirkenden, verschwenkbaren, federbeaufschlagten Verriegelungshaken (19) umfasst, der in der Verriegelungsstellung einen ortsfesten Haltebolzen (20) verriegelnd hintergreift und dass durch Betätigen einer Handhabe (21) der Betätiungseinrichtung (18) der Verriegelungshaken (19) in eine Freigabestellung verlagerbar ist, in der das Lehnenteil (3) in die abgeklappte Stellung (B) bewegbar ist.

4. Sportschalensitz nach Anspruch 3, **dadurch gekennzeichnet, dass** die Betätigungseinrichtung (18) eine Handhabe (21) und ein Übertragungselement (22) umfasst, wobei das Übertragungselement (22) einerseits mit dem Verriegelungshaken (19) und andererseits mit der Handhabe (21) verbunden ist.

5. Sportschalensitz nach Anspruch 4, **dadurch gekennzeichnet, dass** die Handhabe (21) durch eine Zugschlaufe gebildet wird.

6. Sportschalensitz nach Anspruch 4, **dadurch gekennzeichnet, dass** das Übertragungselement (22) durch zumindest einen Bowdenzug (24) gebildet wird.

7. Sportschalensitz nach einem oder mehreren der vorangegangenen Ansprüche, **dadurch gekennzeichnet, dass** die Verriegelungseinrichtung (15) nach Art eines Drehfallenschlosses (23) ausgebildet ist.

8. Sportschalensitz nach einem oder mehreren der vorangegangenen Ansprüche, **dadurch gekennzeichnet, dass** die Verriegelungseinrichtung (15) zwei in Querrichtung gesehen mit Abstand (A) zueinander angeordnete Drehfallenschlösser (23) umfasst, wobei jedes Drehfallenschloss (23) über einen eigenen Bowdenzug mit der gemeinsamen Handhabe (21) verbunden ist.

9. Sportschalensitz nach einem oder mehreren der vorangegangenen Ansprüche, **dadurch gekennzeichnet, dass** jedes Drehfallenschloss (23) ein den Haltebolzen (20) aufnehmendes U-förmiges Lagerteil (25) und ein den Verriegelungshaken (19) beinhaltendes Gehäuseteil (26) umfasst.

10. Sportschalensitz nach Anspruch 1, **dadurch gekennzeichnet, dass** jedes Drehgelenk (13) mit Seitenwangen (6, 7) der lehnenseitigen Tragschale (5) und der sitzseitigen Tragschale (4) verbunden ist.

11. Sportschalensitz nach einem oder mehreren der vorangegangenen Ansprüche, **dadurch gekennzeichnet, dass** zumindest eine der beiden Tragschalen (4, 5) bereichsweise mehrschalig ausgebildet ist und sich aus einer Innenschale (27) und einer Außenschale (28) zusammensetzt.

12. Sportschalensitz nach Anspruch 11, **dadurch gekennzeichnet, dass** die Innenschale (27) und die Außenschale (28) der jeweiligen Tragschalen (4, 5) an gleichgerichteten Wandabschnitten miteinander verklebt sind.

13. Sportschalensitz nach einem oder mehreren der vorangegangenen Ansprüche, **dadurch gekennzeichnet, dass** im Bereich der Drehgelenke (13) taschenförmige Aufnahmen (29, 30) an den Tragschalen (4, 5) zur stabilen Verankerung der Drehgelenke (13) vorgesehen sind.

14. Sportschalensitz nach einem der vorangegangenen Ansprüche, **dadurch gekennzeichnet, dass** die Tragschalen (4, 5) aus einem faserverstärkten, vorzugsweise kohlefaserverstärkten Kunststoff hergestellt sind.

15. Sportschalensitz nach einem oder mehreren der vorangegangenen Ansprüche, **dadurch gekennzeichnet, dass** Bauteile der Verriegelungseinrichtung (15) in taschenförmige Aufnahmen (31) der Tragschalen (4, 5) eingesetzt und mit diesen verklebt sind.

16. Sportschalensitz nach einen oder mehreren der vorangegangenen Ansprüche, **dadurch gekennzeichnet, dass** in der der Fahrzeugaußenseite zugekehrten Seitenwange (7) des Lehnenteils (3) jeweils ein Seitenairbag (38) angeordnet ist.

## Claims

1. Sport bucket seat (1) for vehicles, in particular passenger cars, having a seat part (2) and a backrest part (3), wherein the sport bucket seat (1) comprises at least one dimensionally rigid supporting shell (4, 5) with raised side cheeks (6, 7) for bilaterally supporting the legs, buttocks and upper body of a seat occupant, and the seat part (2) and the backrest part (3) are each assigned a separate supporting shell (4, 5), wherein the two supporting shells (4, 5) of the seat part (2) and of the backrest part (3) are connected to one another via pure pivot joints (13) in a transition region (10), **characterized in that** the pivot joints (13) are arranged adjacent to a lateral transition region (10) of an upper edge (11) of the seat-part side cheek (6) and a front region (12) of the backrest-part side cheek (7), **in that** a releasable locking device (15) is provided between the seat part (2) and the backrest part (3) in a transversely extending rear region of the sport bucket seat (1), and **in that**, by unlocking the locking device (15), the backrest part (3) can be shifted forward from an upright use position (A) into a folded-down position (B) on the seat part (2), in which position problem - free access is provided to a rear seat system of the vehicle.

2. Sport bucket seat according to Claim 1, **characterized in that** the releasable locking device (15) is arranged adjacent to a transversely extending transition region (17) of the seat part (2) and backrest part (3).

3. Sport bucket seat according to one or more of the preceding claims, **characterized in that** the releasable locking device (15) comprises at least one pivotable, spring-loaded locking hook (19) which interacts with an actuating device (18) and which lockingly engages behind a fixed retaining bolt (20) in the locking position, and **in that**, by actuating a handle (21) of the actuating device (18), the locking hook (19) can be shifted into a released position in which the backrest part (3) can be moved into the folded-down position (B).

4. Sport bucket seat according to Claim 3, **characterized in that** the actuating device (18) comprises a handle (21) and a transmission element (22), wherein the transmission element (22) is connected to the locking hook (19) on the one hand and to the handle (21) on the other hand.

5. Sport bucket seat according to Claim 4, **characterized in that** the handle (21) is formed by a pull loop.

6. Sport bucket seat according to Claim 4, **characterized in that** the transmission element (22) is formed by at least one Bowden cable (24).

7. Sport bucket seat according to one or more of the preceding claims, **characterized in that** the locking device (15) is designed in the manner of a rotary-latch lock (23).

8. Sport bucket seat according to one or more of the preceding claims, **characterized in that** the locking device (15) comprises two rotary-latch locks (23) arranged at a distance (A) from one another as seen in the transverse direction, wherein each rotary-latch lock (23) is connected via its own Bowden cable to the common handle (21).

9. Sport bucket seat according to one or more of the preceding claims, **characterized in that** each rotary-latch lock (23) comprises a U-shaped bearing part (25) which accommodates the retaining bolt (20), and a housing part (26) which contains the locking hook (19).

10. Sport bucket seat according to Claim 1, **characterized in that** each pivot joint (13) is connected to side cheeks (6, 7) of the backrest-part supporting shell (5) and of the seat-part supporting shell (4).

11. Sport bucket seat according to one or more of the preceding claims, **characterized in that** at least one of the two supporting shells (4, 5) has a multi-shell design in certain regions and is composed of an inner shell (27) and an outer shell (28).

12. Sport bucket seat according to Claim 11, **characterized in that** the inner shell (27) and the outer shell (28) of the respective supporting shells (4, 5) are adhesively bonded to one another at wall portions which run in the same direction.

13. Sport bucket seat according to one or more of the preceding claims, **characterized in that** pocket-shaped receptacles (29, 30) are provided on the supporting shells (4, 5) in the region of the pivot joints (13) for the purpose of stably anchoring the pivot joints (13).

14. Sport bucket seat according to one of the preceding claims, **characterized in that** the supporting shells (4, 5) are made of a fibre-reinforced, preferably carbon fibre-reinforced, plastic.

15. Sport bucket seat according to one or more of the preceding claims, **characterized in that** components of the locking device (15) are inserted in and adhesively bonded to pocket-shaped receptacles (31) of the supporting shells (4, 5).

16. Sport bucket seat according to one or more of the preceding claims, **characterized in that** a side airbag (38) is arranged in each side cheek (7) of the backrest part (3) that is directed towards the outside of the vehicle.

## Revendications

1. Siège-baquet de sport (1) pour véhicules, notamment pour voitures particulières, avec une partie d'assise (2) et une partie de dossier (3), le siège-baquet de sport (1) comprenant au moins une coque porteuse (4, 5) rigide avec des joues latérales (6, 7) relevées pour soutenir des deux côtés les jambes, les fesses et la partie supérieure du corps d'une personne assise dans le siège, et une coque porteuse (4, 5) séparée étant associée respectivement à la partie d'assise (2) et à la partie de dossier (3), les deux coques porteuses (4, 5), de la partie d'assise (2) et de la partie de dossier (3) étant reliées entre elles dans une zone de transition (10) par l'intermédiaire d'articulations (13) pures, **caractérisé en ce que** les articulations (13) sont disposées à côté d'une zone de transition (10) latérale d'un bord supérieur (11) de la joue latérale (6) située côté assise et d'une zone avant (12) de la joue latérale (7) située côté dossier, que dans une zone du siège-baquet de sport (1) située vers l'arrière et s'étendant dans le plan transversal, un dispositif de verrouillage (15) déclenchable est prévu entre la partie d'assise (2) et la partie de dossier (3) et que la partie de dossier (3) est déplaçable vers l'avant par déverrouillage du dispositif de verrouillage (15) d'une position d'utilisation (A) verticale dans une position (B) rabattue sur la partie d'assise (2) permettant d'accéder sans problème à une banquette de siège arrière du véhicule.

2. Siège-baquet de sport selon la revendication 1, **caractérisé en ce que** le dispositif de verrouillage (15) déclenchable est disposé à côté d'une zone de transition (17) s'étendant dans le plan transversal depuis la partie d'assise (2) et la partie de dossier (3).

3. Siège-baquet de sport selon une ou plusieurs revendications précédentes, **caractérisé en ce que** le dispositif de verrouillage (15) déclenchable comprend au moins un crochet de verrouillage (19) chargé par ressort interagissant avec un dispositif d'actionnement (18) qui engrène par l'arrière dans la position de verrouillage un boulon d'arrêt (20) fixe de façon à le verrouiller et **en ce que** l'actionnement d'une poignée (21) permet au dispositif d'actionnement (18) de déplacer le crochet de verrouillage (19) dans une position de libération dans laquelle la partie de dossier (3) peut être déplacée dans la position (B) rabattue.

4. Siège-baquet de sport selon la revendication 3, **caractérisé en ce que** le dispositif d'actionnement (18) comprend une poignée (21) et un élément de transmission (22), l'élément de transmission (22) étant relié d'une part au crochet de verrouillage (19) et d'autre part à la poignée (21).

5. Siège-baquet de sport selon la revendication 4, **caractérisé en ce que** la poignée (21) prend la forme d'une boucle à tirer.

6. Siège-baquet de sport selon la revendication 4, **caractérisé en ce que** l'élément de transmission (22) prend au moins la forme d'un câble Bowden (24).

7. Siège-baquet de sport selon une ou plusieurs revendications précédentes, **caractérisé en ce que** le dispositif de verrouillage (15) est réalisé comme une serrure à pêne pivotant (23).

8. Siège-baquet de sport selon une ou plusieurs revendications précédentes, **caractérisé en ce que** le dispositif de verrouillage (15) comprend deux serrures à pêne pivotant (23) vues dans la direction transversale séparées d'une certaine distance (A), chaque serrure à pêne pivotant (23) étant reliée à la poignée (21) commune via un câble Bowden.

9. Siège-baquet de sport selon une ou plusieurs revendications précédentes, **caractérisé en ce que** chaque serrure à pêne pivotant (23) comprend une pièce de palier (25) en U logeant le boulon d'arrêt (20) et une partie de boîtier (26) contenant le crochet de verrouillage (19).

10. Siège-baquet de sport selon la revendication 1, **caractérisé en ce que** chaque articulation (13) est reliée aux joues latérales (6, 7) de la coque porteuse (5) côté dossier et de la coque porteuse (4) côté assise.

11. Siège-baquet de sport selon une ou plusieurs revendications précédentes, **caractérisé en ce qu'**au moins l'une des deux coques porteuses (4, 5) est réalisée par zones au moyen de plusieurs coques et se compose d'une coque intérieure (27) et d'une coque extérieure (28).

12. Siège-baquet de sport selon la revendication 11, **caractérisé en ce que** la coque intérieure (27) et la coque extérieure (28) des coques porteuses (4, 5) respectives sont collées entre elles au niveau des segments de paroi redressés.

13. Siège-baquet de sport selon une ou plusieurs revendications précédentes, **caractérisé en ce que** dans la zone des articulations (13), des logements (29, 30) en forme de sac sont prévus au niveau des coques porteuses (4, 5) pour stabiliser l'ancrage des articulations (13).

14. Siège-baquet de sport selon l'une quelconque des revendications précédentes, **caractérisé en ce que** les coques porteuses (4, 5) sont fabriquées en matière synthétique renforcée de fibres, de préférence renforcée de fibres de carbone.

15. Siège-baquet de sport selon une ou plusieurs revendications précédentes, **caractérisé en ce que** les composants du dispositif de verrouillage (15) sont insérés dans les logements (31) en forme de sac des coques porteuses (4, 5) et collés à eux.

16. Siège-baquet de sport selon une ou plusieurs revendications précédentes, **caractérisé en ce qu'**un airbag latéral (38) est respectivement disposé dans une joue latérale (7) orientée côté extérieur du véhicule de la partie de dossier (3).
